# EUROPÄISCHE PATENTSCHRIFT

(11) **EP 2 612 021 B1**
(45) Veröffentlichungstag und Bekanntmachung des Hinweises auf die Patenterteilung: **16.07.2014**
(21) Anmeldenummer: 11760679.8
(22) Anmeldetag: 19.08.2011
(51) Int. Cl.: F03B 3/18

(54) **LEITAPPARAT FÜR STRÖMUNGSMASCHINEN**
GUIDE APPARATUS FOR TURBOMACHINES
DISTRIBUTEUR POUR TURBOMACHINES

(30) Priorität: 30.08.2010 AT 14462010
(43) Veröffentlichungstag der Anmeldung: 10.07.2013
(73) Patentinhaber: Andritz Hydro GmbH, 1120 Wien (AT)
(72) Erfinder: NOWICKI, Peter, 88250 Weingarten (DE); ABELE, Christof, 88212 Ravensburg (DE); KUHN, Klaus, 88212 Ravensburg (DE)
(74) Vertreter: Schweinzer, Friedrich
(86) Internationale Anmeldenummer: PCT/AT2011/000350
(87) Internationale Veröffentlichungsnummer: WO 2012/027766

(56) Entgegenhaltungen:
- CH-A- 228 733
- DE-A1- 2 134 559
- GB-A- 989 828
- JP-A- 8 074 725
- US-A- 1 543 050
- US-A- 1 585 862

## Beschreibung

Die Erfindung betrifft einen Leitapparat für Strömungsmaschinen, insbesondere für Francis- oder Kaplanturbinen bzw. Pumpen oder Pumpturbinen mit mehreren Leitschaufeln, die über je einen Lenker an einem gemeinsamen Verstellorgan betätigt werden, wobei Sicherheitselemente vorgesehen sind, wobei als Sicherheitselement ein Biegebruchlenker vorgesehen ist.

Es sind Verstellvorrichtungen bei Leitapparaten bekannt, bei denen jeder oder jeder zweite der Übertragungsmechanismen ein Sicherheitselement aufweist, das das bei einem Schließvorgang auf die Leitschaufel übertragene Drehmoment begrenzt. Diese Sicherheitselemente sollen vermeiden, dass bei zufälligem Einklemmen eines festen Körpers zwischen zwei benachbarten Leitschaüfeln sich das volle, von der Betätigungseinrichtung am gemeinsamen Verstellorgan aufbringbare Drehmoment auf die am Schließen verhinderten Schaufeln konzentriert, was eine Beschädigung der Schaufeln oder auch des Verstellorgans verursachen könnte. Als derartige Sicherheitselemente wurden u.a. Scherbolzen oder Zug-Bruchbolzen eingesetzt, welche vor Überschreiten des höchstzulässigen Drehmomentes brechen und dabei die Schaufel aus dem Verband freigeben. Eine derartige Verstellvorrichtung ist z.B. in der CH 444 787 dargestellt. Weiter bestehende Sicherheitselemente sind Knicklenker und Biegelenker (z.B. JP 8074725 A) sowie rückstellende Sicherheitselemente mit Federelementen (z.B. GB 0989828 A) und Hydrauliksystemen (z.B. DE 1503299 A1). Weiters zeigt die DE 2134559 A1 Lenker (Schaltstangen) von hydraulischen Maschinen, die zwei getrennte Abschnitte aufweisen. Hier besteht jedoch das Problem, dass die Verformbarkeit und Bruchgrenze nur in engen Grenzen bestimmt und eingestellt werden können.

Ziel der Erfindung ist es, die Nachteile der bekannten Sicherheitselemente zu vermeiden und eine einfache, günstige, präzise und sichere Verbindung zwischen Leitschaufel und Verstellorgan zu gewährleisten.

Die Erfindung ist dadurch gekennzeichnet, dass das Sicherheitselement einen Biegekörper und eine Verschraubung aufweist und als Verschraubung ein vorgespannter Zugbolzen vorgesehen ist, der einen vordefinierten Bruchquerschnitt aufweist. Die Neuerung der Erfindung besteht in der Kombination aus Biegung und Bruch als Sicherheitselement. Durch die Kombination eines duktil verformenden und eines spröd brechenden hochfesten Materials wird eine Auslösecharakteristik erreicht, die sehr gut für Überlastsicherungen geeignet ist. Durch die beschriebene Ausführung kann einerseits verhindert werden, dass die Leitschaufel bzw. das Verstellorgan oder auch Reguliermechanik beschädigt wird und andererseits auch, dass benachbarte Leitschaufeln in Mitleidenschaft gezogen werden. Eine günstige Ausgestaltung der Erfindung ist dadurch gekennzeichnet, dass die Verschraubung mit einer Hülse umgeben ist.

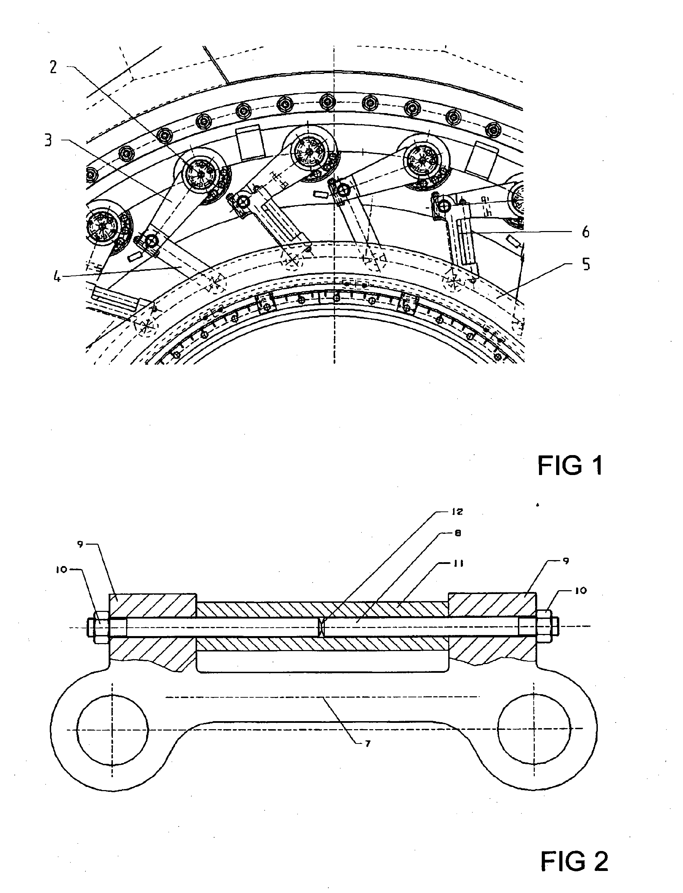

Die Erfindung wird nun anhand der Zeichnungen beispielhaft beschrieben, wobei Fig. 1 den Leitapparat einer Francisturbine mit erfindungsgemäßen Biegebruchlenkem und Fig. 2 einen erfindungsgemäßen Biegebruchlenker im Detail darstellt.

Fig. 1 zeigt einen Ausschnitt eines Leitapparates 1 einer Francisturbine. Man erkennt hier die Achsen 2 der Leitschaufeln, die über einen Leitschaufelhebel 3 und einen damit gelenkig verbundenen Lenker 4 am Regulier- oder Verstellring 5 befestigt sind. Durch ein Verdrehen des Verstellrings 5 werden somit alle Leitschaufeln über deren Achsen 2 gleichmäßig verstellt. In der einen Endposition dienen die Leitschaufeln auch als Absperrorgan. Da mit dem Wasserstrom Fremdkörper in die Turbine und den Leitapparat gelangen können, besteht die Gefahr, dass das Schließen der Leitschaufeln durch einen im Leitapparat eingeklemmten Fremdkörper behindert wird. Sind keine Sicherheitselemente vorhanden, wird das betroffene Leitschaufelpaar beim Schließvorgang beschädigt. Das Sicherheitselement gewährleistet, dass die anderen Leitschaufeln der Turbine sicher schließen können, auch wenn ein Leitschaufelpaar durch einen Fremdkörper behindert ist. Die blockierte Leitschaufel mit Sicherheitselement wird ab Überschreiten einer definierten Kraft somit aus der Gesamtbewegung des Leitapparates 1 ausgeschlossen und vor Beschädigungen geschützt. Im vorliegenden Beispiel ist nur der Übertragungsmechanismus jeder zweiten Leitschaufel mit dem erfindungsgemäßen Biegebruchlenker 6 versehen. Der Übertragungsmechanismus der dazwischen liegenden Schaufeln erfolgt wie bisher durch einen (unnachgiebigen) Lenker 4.

Die Erfindung ist nicht auf das vorgestellte Beispiel beschränkt. Es kann z.B. auch jeder Lenker 4 als Biegebruchlenker 6 ausgeführt sein.

In Fig. 2 ist ein erfindungsgemäßer Biegebruchlenker 6 dargestellt. Der Biegebruchlenker 6 besteht aus einem Biegekörper (Biegeprofil) 7, das einerseits mit dem Leitschaufelhebel 3 der Leitschaufel und andererseits mit dem Verstellring 5 verbunden ist. Zur Versteifung dient eine Verschraubung. Diese Verschraubung besteht aus einem vorgespannten Zugbolzen 8, der zwischen zwei Schenkeln 9 mittels Muttern 10 verschraubt wird. Im Bereich zwischen den beiden Schenkeln 9 ist der Zugbolzen 8 von einer Hülse 11 umgeben. Die Kombination aus Biegekörper 7 und Verschraubung ist in der Lage, die erforderlichen Stellkräfte zu übertragen. Die Auslösekraft des Biegebuchlenkers 6 wird durch den Bruchquerschnitt 12 des vorgespannten Zugbolzens 8 definiert. Der Bruchquerschnitt 12 befindet sich hier etwa in der Mitte des Zugbolzens, er kann aber z.B. auch am Übergang von Hülse 11 zum Schenkel 9 angeordnet sein. Nach einem Bruch im Lenker wird die Leitschaufel durch den Biegekörper 7 gehalten. Eine völlig freie Bewegung der Leitschaufel in der Strömung wird somit unterbunden. Das Sicherheitselement ist bis zum Erreichen der Überlastungsgrenze ohne bleibende Deformationen, da die Kombination aus Verschraubung und Biegekörper 7 ein sehr hohes Flächenträgheitsmoment ergibt. Bei Überschreitung der Belastungsgrenze bricht der Zugbolzen 8 an dem Bruchquerschnitt 12, das Flächenträgheitsmoment des Blegebruchlenkers 6 reduziert sich sprunghaft und die Leitschaufel wird sofort entlastet. Dies ist ein entscheidender Vorteil gegenüber einem reinen Biegelenker wie zum Beispiel im Dokument JP 8074725 A beschrieben. Bei einem reinen Biegelenker ist die Auslösecharakteristik ungünstig, da die Auslösung eines Biegelenkers nicht an einem definierten Punkt erfolgt. Dies ist begründet in der Traglastreserve die beim Biegevorgang besteht. Bei der Erfindung sind die Auslösekraft am Biegebruchlenker 6 und die Haltekraft nach dem Bruch des Zugbolzens 8 unabhängig voneinander über die Dimensionierung des Bruchquerschnittes 12 und den Querschnitt des Biegekörpers 7 wählbar. Die Auslösekraft ist unabhängig vom Verhältnis zwischen Knickkraft und Einbaulänge. Der Biegebruchlenker 6 kann dadurch auch für Francisturbinen eingesetzt werden, bei denen ein Knickelement mangels Knicklänge nicht realisierbar ist.

Der Biegebruchlenker 6 besitzt eine geringe Streuung der Auslösekraft im Vergleich zu Scherbolzen- oder Knicklenker. Dies wird gewährleistet durch das Auslösen über eine vorgespannte Schraubverbindung sowie den geringen Reibungseinfluss der Lager (zum Verstellring 5 und Leitschaufellenker 3) aufgrund von großen Exzentrizitäten an Biegekörper 7 und Zugbolzen 8. Die Berechnung erfolgt nach stabilen Berechnungsmodellen und trägt somit ebenfalls zu einer sehr geringen Streuung der Auslösekraft bei. Im Vergleich dazu sind Knicklenker als Sicherheitselement aufgrund instabilen Versagens sehr schwierig auszulegen. Die Streuung der Auslösekräfte ist dementsprechend hoch. Durch eine geringe Streuung der Auslösekraft am Biegebruchlenker 6 kann die Auslösekraft bei gleichbleibenden Sicherheiten geringer gewählt werden. Die übrigen Leitapparatkomponenten können dadurch kleiner dimensioniert werden. Der erfindungsgemäße Biegebruchlenker 6 ist für Turbinen und Pumpturbinen mit hoher dynamischer Belastung gut geeignet. Durch den vorgespannten Zugbolzen 8 wird die Belastung am Bruchquerschnitt 12 verkleinert und Dauerfestigkeitsprobleme werden reduziert. Der Biegebruchlenker 6 ist ein einfaches und kostengünstiges Bauteil. Nach einem Auslösefall kann er sehr leicht ausgetauscht werden. Dies kann auch bei montierter Turbine bzw. Pumpturbine erfolgen, da die Verstellung außerhalb am Turbinendeckel angebracht ist.

## Patentansprüche

1. Leitapparat für Strömungsmaschinen, insbesondere für Francis- oder Kaplanturbinen bzw. Pumpen oder Pumpturbinen mit mehreren Leitschaufeln, die über je einen Lenker (4, 6) an einem gemeinsamen Verstellorgan (5) betätigt werden wobei Sicherheitselemente vorgesehen sind, wobei als Sicherheitselement ein Biegebruchlenker (6) vorgesehen ist, **dadurch gekennzeichnet, dass** der Biegebruchlenker (6) einen Biegekörper (7) und eine Verschraubung (8, 10)aufweist und als Verschraubung ein vorgespannter Zugbolzen (8) vorgesehen ist, der einen vordefinierten Bruchquerschnitt (12) aufweist.

2. Leitapparat nach Anspruch 1, **dadurch gekennzeichnet, dass** sich das Flächenträgheitsmoment des Sicherheitselements sprunghaft reduziert.

3. Leitapparat nach Anspruch 1 oder 2, **dadurch gekennzeichnet, dass** die Verschraubung (8) mit einer Hülse (11) umgeben ist.

## Claims

1. Guide vane assembly for continuous-flow machines, particularly for Francis or Kaplan turbines and for pumps or pump turbines, with a plurality of guide vanes actuated by one link (4, 6) each on a common adjusting element (5), where safety elements are provided, with a bending-breaking link (6) being provided as safety element, **characterized by** the bending-breaking link (6) having a bending element (7) and a screw connection (8, 10), and by a prestressed tension bolt (8) with a pre-defined rupture cross-section (12) being provided as screw connection.

2. Guide vane assembly according to Claim 1, **characterized by** the moment of inertia of the safety element dropping dramatically.

3. Guide vane assembly according to Claim 1 or 2, **characterized by** the screw connection (8) being surrounded by a sleeve (11).

## Revendications

1. Distributeur pour machines à fluide, surtout pour des turbines Francis ou Kaplan et/ou pour des pompes et des pompes-turbines, comportant une pluralité d'aubes directrices dont chacune est actionnée par un guide (4, 6) monté sur un élément d'ajustage commun (5), où des éléments de sécurité sont prévus, un guide de cintrage-rupture (6) étant prévu comme élément de sécurité, **caractérisé en ce que** le guide de cintrage-rupture (6) comporte un corps de cintrage (7) et un raccord à vis (8, 10), et **en ce qu'**un boulon de tension précontraint (8), qui comporte une section transversale de rupture prédéfinie (12), est prévu comme raccord à vis.

2. Distributeur selon la revendication 1, **caractérisé en ce que** le moment d'inertie géométrique de l'élément de sécurité se réduit par à-coups.

3. Distributeur selon la revendication 1 ou 2, **caractérisé en ce que** le raccord à vis (8) est entouré d'une douille (11).
